# EUROPEAN PATENT SPECIFICATION

(11) **EP 4 604 038 B1**
(45) Date of publication and mention of the grant of the patent: **04.11.2026**
(21) Application number: 24158030.7
(22) Date of filing: 16.02.2024
(51) Int. Cl.: G06Q 10/30, G06Q 50/06

(54) **A METHOD FOR SUPPORTING A RECYCLING PROCESS OF A WIND TURBINE COMPONENT**
VERFAHREN ZUR UNTERSTÜTZUNG EINES RECYCLINGVERFAHRENS EINER WINDTURBINENKOMPONENTE
PROCÉDÉ DE SUPPORT D'UN PROCESSUS DE RECYCLAGE D'UN COMPOSANT D'ÉOLIENNE

(43) Date of publication of application: 20.08.2025
(73) Proprietor: Nordex Energy SE & Co. KG, 22419 Hamburg (DE)
(72) Inventor: Haspel, Benedikt, 18055 Rostock (DE)
(74) Representative: Hauck Patent- und Rechtsanwälte PartmbB

(56) References cited:
- US-A1- 2021 229 107
- KHALID MUHAMMAD YASIR ET AL: "Recycling of wind turbine blades through modern recycling technologies: A road to zero waste", RENEWABLE ENERGY FOCUS, vol. 44, 1 March 2023 (2023-03-01), AMSTERDAM, NL, pages 373 - 389, XP093187222, ISSN: 1755-0084, DOI: 10.1016/j.ref.2023.02.001
- SORTE SANDRA ET AL: "Unlocking the Potential of Wind Turbine Blade Recycling: Assessing Techniques and Metrics for Sustainability", ENERGIES, vol. 16, no. 22, 17 November 2023 (2023-11-17), CH, pages 7624, XP093187285, ISSN: 1996-1073, DOI: 10.3390/en16227624

## Description

The invention relates to a method for supporting a recycling process of a wind turbine component. Wind turbine components are large and heavy parts including different materials, and have a limited service life, typically on the order of 20 to 30 years. Although at least some of the included materials are expensive and still of high value at the end of life of the wind turbine component, technical and logistical problems make it difficult to properly recycle the included materials. As a consequence, most wind turbine components all over the world have been disposed of without making further use of their constituents, for example rotor blades have been buried in landfills.

The manufacturers of wind turbine components nevertheless consider adapting their manufacturing processes to overcome some of the technical limitations, for example such that steel parts can be removed from composite materials.

The document WO 2018/165669 A1 as well as family member US 2021/229107 A1 disclose a tracking system for a recycling process applied to wind turbine rotor blades. The tracking system includes an RFID tag attached to a wind turbine rotor blade and a recycling management database used for tracking the recycling process of this specific wind turbine blade, from end of life to shipping of products resulting from a recycling process.

Departing therefrom, it is an object of the invention to provide a method for supporting a recycling process of a wind turbine component so that the best recycling processes available for each wind turbine component can be applied.

This object is solved by the method of claim 1. Preferred aspects of the method are given in the dependent claims.

The method is for supporting a recycling process of a wind turbine component, and comprises the following steps:
- Storing information on a wind turbine component in a database, the information including at least a type of the wind turbine component and several materials included in the wind turbine component,
- Storing information on a plurality of different recycling processes in a database, the information for each recycling process including at least a list of materials for which the recycling process is suitable,
- Compiling recycling information on the wind turbine component by means of software and based on the stored information, the recycling information including one or more recycling processes suitable for the wind turbine component, and
- Issuing a recycling passport for the wind turbine component based on the recycling information, wherein the recycling passport is a document that discloses at least one recycling process suitable for the wind turbine component.

The two steps of storing information relate to two different types of information. The first type of information pertains to a specific wind turbine component, the second type of information pertains to a number of specific recycling processes. Both types of information are stored in a database, wherein either a common database or separate databases may be used.

Both storing information-steps may be carried out in any order, wherein data gathering and/or storing will usually be an ongoing process. Whenever new information becomes available, for example when a new wind turbine component has been designed or shall be integrated into the method, or when information on an existing or an entirely new recycling process becomes available or requires an update, the respective storing information-step may be repeated in order to complement or update the information already available in the database(s).

The information stored on a wind turbine component includes at least a type of the wind turbine component, so that the construction type/product series can be identified. In addition, the information includes several materials included in the wind turbine component, in particular in the form of a list of materials. The list may be complete so that it includes all of the materials present in the wind turbine component, or may be limited to those materials present in a certain amount, such as at a quantity of at least 0.1%, at least 1% or at least 5 % by weight of the entire wind turbine component. It is also possible to define specific criteria on which materials are to be listed, for example with a focus on those materials having a special impact on the recycling options, even if these materials are present at low quantity only.

The information stored in the database for each recycling process includes some information required to identify the respective process, such as a process description or at least a name of the process, and a list of materials for which the recycling process is suitable.

In a further step of the method carried out by means of software after the required information has been stored in the database(s), recycling information is compiled. The recycling information includes one or more recycling processes suitable for the wind turbine component. The recycling information is based on both types of information stored in the database(s), so neither information on a wind turbine component, nor information on the recycling processes alone is enough to compile the resulting information which is specific for the wind turbine component of concern.

In a final step of the method, a recycling passport for the wind turbine component is issued based on the recycling information. The recycling passport is a dated document, in electronic or printed form, that discloses at least one recycling process suitable for the wind turbine component. The recycling passport may be signed, for example with an electronic signature, and is a reliable, trustworthy source of information on the available options for recycling of the specific wind turbine component.

The inventors realized one of the many obstacles to be overcome on the way towards circularity in the wind turbine economy is that, although reasonable recycling processes are generally available, detailed information on the wind turbine component to be recycled are required. Given long lifecycles of wind turbine components, it may be almost impossible to figure out which materials had been used for example in a wind turbine rotor blade manufactured about 30 years ago. The required information typically has never been published or made available to the customer or owner of the wind turbine component. Even if so, the information may have gone lost over the years, or may not be available any longer in a reliable manner with reasonable effort. For these reasons, the required information typically will not be at hand. In this case, it may be an option to carry out an analysis of materials, but this will be too costly and will further cause severe logistical problems.

The invention provides a simple solution to all of these difficulties. Once implemented, the method ensures that all of the required information will be available right away at the end of life of the wind turbine component. No labor intensive steps or even no human input at all may be required to carry out the method. In particular, the step of compiling the recycling information and/or of issuing the recycling passport can be carried out automatically, if desired by using artificial intelligence for analyzing, and/or combining the stored information and/or for bringing the recycling information in a desired format.

Another important advantage of the invention is that the information available at the end of life of the wind turbine component will always be up to date, provided the information on the recycling processes is properly maintained. Therefore, the information will typically go far beyond the recycling information that one could have documented when the wind turbine component was commissioned.

In an aspect, the method comprises the following additional step:
- Providing the recycling passport to a potential customer and/or to a current owner of the wind turbine component.

The recycling passport is most important at the end of life of the wind turbine component, when a decision on the recycling processes shall be taken. However, providing the recycling passport already before the end of life, either to potential customers or to current owners, helps raising awareness of the available recycling options.

In an aspect, the recycling passport is issued upon request of a current owner of the wind turbine component. In general, the recycling passport may be issued any time. Providing the recycling passport on request allows the current owner to always receive up-to-date information, whenever deemed helpful.

In an aspect, the database comprising the information on the wind turbine component and/or the information on the recycling processes is maintained by a manufacturer of the wind turbine component. This will allow integration of the best information available on the wind turbine component. Moreover, the manufacturer in this way can take over responsibility also for the recycling processes. Other entities that may maintain the databases and/or implement the method include local authorities and inter-trade organizations.

In accordance with the invention, the database comprising the information on the recycling processes is updated continuously. As mentioned before, this allows to provide up-to-date information in the recycling passport any time.

In an aspect, the information on the wind turbine component is stored or updated in the database when a manufacturing process of the wind turbine component is completed. This step, in contrast to storing the information earlier, for example whenever a new wind turbine component has been designed, ensures the information used for the recycling passport correctly represents the wind turbine component as it has actually been manufactured.

In an aspect, the information on the wind turbine component includes a serial number of the wind turbine component and/or quantitative data on an amount and/or an exact composition of a material included in the wind turbine component and/or a location of intended use of the wind turbine component. The serial number allows to exactly identify the specific wind turbine component, not just a general type or product series of the component. This is important whenever the same type of wind turbine component is manufactured using different materials, for example at different manufacturing sites. The information then issued as recycling passport always reflects the exact component to be recycled. Gathering also quantitative data on an amount and/or composition of the materials allows to provide more precise recycling information for the wind turbine component. Including information on a location of intended use, such as a geographic region or a country, may be helpful when selecting a suitable recycling process, because whether a certain recycling process is suitable may not only depend on the technical details of the process, but also on the availability of this process at the specified location and/or on local regulations. As a consequence, a recycling passport for a certain wind turbine component shipped to a first country may differ from a recycling passport for an identical wind turbine component shipped to another, second country.

In an aspect, the information for at least one of the recycling processes includes one or more materials the recycling process is incompatible with. Should it turn out the wind turbine component includes this incompatible material, the corresponding recycling process can be excluded from the list of suitable recycling processes documented in the recycling passport, even if the majority of materials included in the wind turbine component may be well suited for this recycling process. An example are wind turbine components including PVC, which is generally regarded as being incompatible with co-processing.

In an aspect, the information on at least one of the recycling processes includes parameters indicating costs, an energy demand, an environmental footprint, a material recovery rate and/or a thermal recovery rate of the recycling process when applied to a suitable material. Making available these specific parameters allows providing even more specific information in the recycling passport.

In an aspect, the recycling passport includes a description of the wind turbine component, a description of a suitable recycling process, information on an approved recycling hub and/or an efficiency rating and/or quantitative information per unit mass and/or for the entire wind turbine component on costs, energy demand, environmental footprint, thermal recovery rate, material recovery rate. Adding these elements to the recycling passport help the user to better understand and make use of the information disclosed therein. The user does not only find information on recycling processes generally available and suitable for his wind turbine component, but also finds additional information that are helpful for selecting the recycling processes best serving his needs. The user can take a well-informed decision on the recycling solution. Each of the elements mentioned can be very specific, for example the information on an improved recycling hub may list the available sites, capacities and logistical preferences of the recycling hub, as well as contact person.

In an aspect, the recycling passport discloses at least two recycling processes suitable for the wind turbine component and/or for a specific part of the wind turbine component, and a ranking indicating a preference for at least one of the at least two recycling processes. The ranking of the suitable recycling processes may be a specific order of all suitable recycling processes, from most suitable to least suitable, and/or a quantitative label for each suitable recycling process indicating for example to what extent this recycling process meets the pre-defined criteria. These criteria may include e.g. efficiency ratings, an environmental footprint and a recovery rate as discussed above, but also the availability of the recycling processes at the specified location. Disclosing in the recycling passport more than one suitable recycling process in combination with the ranking makes it easy for a user to decide on the recycling process to be applied.

In an aspect, the method comprises the following additional steps:
- Subjecting at least a portion of a wind turbine component to a recycling process in a test procedure,
- Collecting data on the recycling process in the test procedure, and
- Establishing the information on the recycling process to be stored in the database.

In this aspect, a recycling process under consideration is evaluated in detail in a test procedure for the specific type of a wind turbine component. The information on the recycling process gathered during this test is then stored in the database, so that the recycling passport includes particularly specific and trustworthy information which may not be available elsewhere.

In an aspect, the method comprises the following additional steps:
- Selecting a recycling process for a wind turbine component based on the information provided in the recycling passport, and
- Recycling of the wind turbine component with the selected recycling process.

In this aspect, the method does not end with the issuance of the recycling passport, but also covers the recycling of the wind turbine component with the recycling process(es) selected based on the recycling passport.

In an aspect, the wind turbine component is a wind turbine rotor blade, a wind turbine tower, a wind turbine foundation, a wind turbine part located in a nacelle and/or a wind turbine nacelle housing. Each of these components has specific requirements as to the recycling processes and may benefit from the inventive method.

In an aspect, the recycling processes include one or more of the following processes: Mechanical grinding, pyrolysis, solvolysis, chemolysis, co-processing. These processes are well known in the recycling industry and may be suitable for various wind turbine components. The pyrolysis may be carried out inline or batch-wise (inline-pyrolysis/batch-pyrolysis)

In an aspect, the list of materials includes one or more of the following materials: Glass fiber reinforced plastics, carbon fiber reinforced plastics, epoxy, poly-urethane (PU), vinyl ester, polyethylene terephthalate (PET), wood, polyvinyl chloride (PVC), steel. All of these materials may be present in typical wind turbine components in substantial amounts.

In the following, the invention is explained in greater detail based on an embodiment shown in a drawing.
- Fig. 1: illustrates the method based on a schematic drawing,
- Fig. 2: illustrates compiling of the recycling information for a first recycling passport, and
- Fig. 3: illustrates compiling of the recycling information for a second recycling passport.

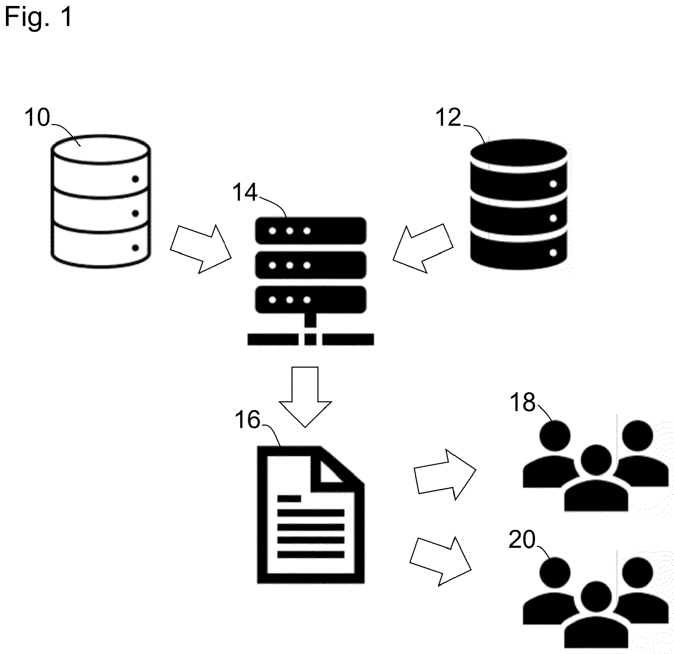

To the top left, Fig. 1 shows a first database 10 in which information on numerous wind turbine components is stored. The information includes, for each type of wind turbine component, a type of the wind turbine component and a list of several materials included in that wind turbine component.

To the top right, Fig. 1 shows a second database 12 in which information on a plurality of different recycling processes is stored. The information for each recycling process includes at least a list of materials for which the respective recycling process is suitable.

A computer system 14 is used for compiling recycling information on the wind turbine component by means of software and based on the information stored in the databases 10, 12. The recycling information includes a number of recycling processes suitable for the wind turbine component.

Once the recycling information is compiled by the computer system 14, a recycling passport 16 is issued, specifically for the wind turbine component under consideration. The recycling passport 16 is based on the recycling information and can be issued as a dated document in electronic or printed form. The recycling passport 16 discloses at least one recycling process suitable for the wind turbine component.

The recycling passport 16 may be distributed to potential customers 18 of the wind turbine component and/or to current owners 20 thereof.

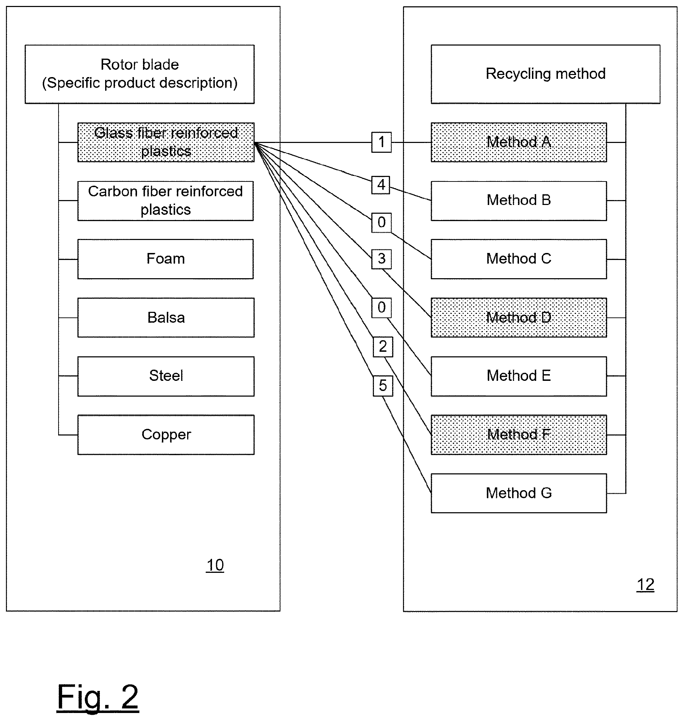

Figure 2 illustrates parts of the information stored in the first database 10 and the second database 12 and which are at least partly disclosed in a recycling passport issued for a wind turbine rotor blade as a typical example of a wind turbine component. The wind turbine rotor blade is schematically represented to the top left of Fig. 2 by a box including a specific product description, possibly including a serial number of the wind turbine rotor blade. The boxes arranged below represent different materials comprised in the wind turbine rotor blade, including glass fiber reinforced plastics, carbon fiber reinforced plastics, foam, balsa, steel and copper. All these information is stored in the first database.

To the right of Fig. 2, eight recycling processes are shown, labelled from "Method A" to "Method G" and stored in the second database. The part of the recycling passport represented by Fig. 2 relates to one of the materials of the wind turbine rotor blade only, namely to glass fiber reinforced plastics. Regarding this material, the second database provides a ranking of the eight available recycling processes. The ranking information is indicated by the numbers 0 to 5, making clear that "Method A" labelled with the number 1 is the recycling process deemed most suitable, while "Method G" labelled with the number 5 is the recycling process deemed least suitable. The two methods labelled with number 0 are not suitable for the recycling of glass fiber reinforced plastics material of this special rotor blade. This means, they might be not suitable for recycling of glass fiber reinforced plastics at all, or they might be suitable in general, but, for example, not be allowed in the country of the installation of the wind turbine comprising the specific rotor blade.

The methods ranked with number 0 are not included in the recycling passport. They are only listed in the second database. Alternatively, only the most suitable methods having a ranking with the numbers 1 to 3 are included in the recycling passport. Similar information may be disclosed in the recycling passport for each of the other materials of the wind turbine rotor blade.

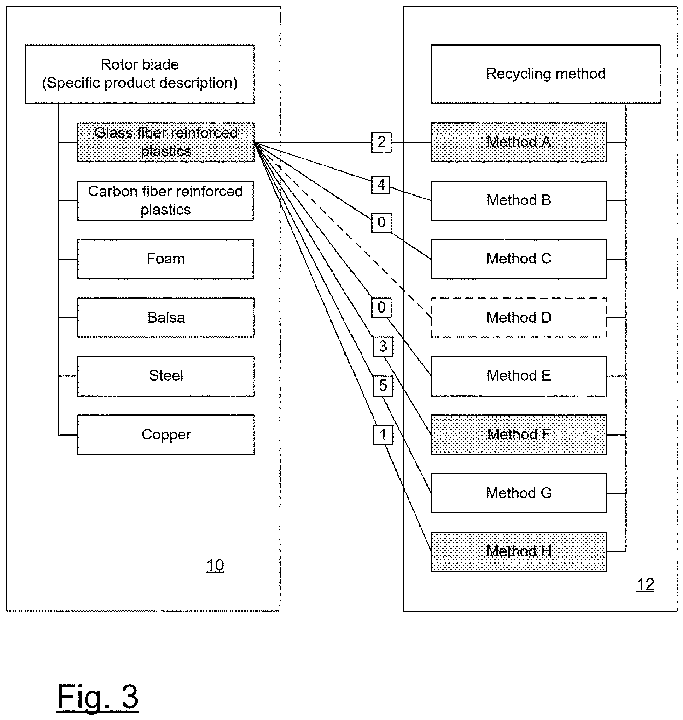

Figure 3 illustrates the content of the first and second data bases and parts of the information disclosed in another recycling passport issued for the same wind turbine rotor blade as Fig. 2 but issued several years later. For example, the recycling passport of Fig. 2 may have been issued at the time of delivery of the wind turbine rotor blade, and the recycling passport of Fig. 3 may have been issued 30 years later when it is to be decided on if and how the wind turbine rotor blade shall be recycled.

The left part of Fig. 3 illustrating the wind turbine component is identical to the left part of Fig. 2, because the available information on the wind turbine rotor blade is still the same. The right part of Fig. 3, however, has changed over time, because new recycling processes have been established, such as the "Method H" which has not been known or has not been available at the time of delivery. Also, "Method D" is no longer available and has therefore been cancelled. Another important change concerns the ranking of the suitable methods. The new "Method H" now has the highest ranking (number 1), while the initially preferred "Method A" is deemed second most suitable (number 2).

### List of reference numerals

- 10: database including information on wind turbine components
- 12: database including information on recycling processes
- 14: computer system
- 16: recycling passport
- 18: potential customers
- 20: owners

## Claims

1. A method for supporting a recycling process of a wind turbine component, the method comprising the following steps:
• Storing information on a wind turbine component in a database (10), the information including at least a type of the wind turbine component and several materials included in the wind turbine component,
• Storing information on a plurality of different recycling processes in a database (12), the information for each recycling process including at least a list of materials for which the recycling process is suitable, wherein the database (12) comprising the information on the recycling processes is updated continuously,
• Compiling recycling information on the wind turbine component by means of software and based on both types of information stored, namely on the information on the wind turbine component and on the information on the plurality of different recycling processes, the recycling information including one or more recycling processes suitable for the wind turbine component, wherein the step of compiling the recycling information is carried out automatically, and
• Issuing a recycling passport (16) for the wind turbine component based on the recycling information, wherein the recycling passport (16) is a document that discloses at least one recycling process suitable for the wind turbine component.

2. The method of claim 1, comprising the following additional step:
• Providing the recycling passport (16) to a potential customer (18) and/or to a current owner (20) of the wind turbine component.

3. The method of claim 1 or 2, wherein the recycling passport (16) is issued upon request of a current owner (20) of the wind turbine component.

4. The method of any of the claims 1 to 3, wherein the database (10, 12) comprising the information on the wind turbine component and/or the information on the recycling processes is maintained by a manufacturer of the wind turbine component.

5. The method of any of the claims 1 to 4, wherein the information on the wind turbine component is stored or updated in the database (10) when a manufacturing process of the wind turbine component is completed.

6. The method of any of the claims 1 to 5, wherein the information on the wind turbine component includes a serial number of the wind turbine component and/or quantitative data on an amount and/or exact composition of a material included in the wind turbine component and/or a location of intended use of the wind turbine component.

7. The method of any of the claims 1 to 6, wherein the information for at least one of the recycling processes includes one or more materials the recycling process is incompatible with.

8. The method of any of the claims 1 to 7, wherein the information on at least one of the recycling processes includes parameters indicating costs, an energy demand, an environmental footprint, a material recovery rate and/or a thermal recovery rate of the recycling process when applied to a suitable material.

9. The method of any of the claims 1 to 8, wherein the recycling passport (16) includes a description of the wind turbine component, a description of a suitable recycling process, information on an approved recycling hub and/or an efficiency rating and/or quantitative information per unit mass and/or for the entire wind turbine component on costs, energy demand, environmental footprint, thermal recovery rate, material recovery rate.

10. The method of any of the claims 1 to 9, wherein the recycling passport (16) discloses at least two recycling processes suitable for the wind turbine component and/or for a specific part of the wind turbine component, and a ranking indicating a preference for at least one of the at least two recycling processes.

11. The method of any of the claims 1 to 10, comprising the following additional steps:
• Subjecting at least a portion of a wind turbine component to a recycling process in a test procedure,
• Collecting data on the recycling process in the test procedure, and
• Establishing the information on the recycling process to be stored in the database (12).

12. The method of any of the claims 1 to 11, comprising the following additional steps:
• Selecting a recycling process for a wind turbine component based on the information provided in the recycling passport (16), and
• Recycling of the wind turbine component with the selected recycling process.

13. The method of any of the claims 1 to 12, wherein the wind turbine component is a wind turbine rotor blade, a wind turbine tower, a wind turbine foundation, a wind turbine part located in a nacelle and/or a wind turbine nacelle housing.

14. The method of any of the claims 1 to 13, wherein the recycling processes include one or more of the following processes: mechanical grinding, pyrolysis, solvolysis, chemolysis, co-processing, and/or wherein the list of materials includes one or more of the following materials: glass fiber reinforced plastics, carbon fiber reinforced plastics, epoxy, poly-urethane (PU), vinyl ester, polyethylene terephthalate (PET), wood, polyvinyl chloride (PVC), steel.

## Patentansprüche

1. Verfahren zur Unterstützung eines Recyclingprozesses einer Windturbinenkomponente, wobei das Verfahren die folgenden Schritte umfasst:
• Speichern von Informationen über eine Windturbinenkomponente in einer Datenbank (10), wobei die Informationen zumindest eine Art der Windturbinenkomponente und mehrere in der Windturbinenkomponente umfasste Materialien umfassen,
• Speichern von Informationen über eine Vielzahl von unterschiedlichen Recyclingprozessen in einer Datenbank (12), wobei die Informationen für jeden Recyclingprozess zumindest eine Liste von Materialien umfassen, für die der Recyclingprozess geeignet ist, wobei die Datenbank (12), die die Informationen über die Recyclingprozesse umfasst, fortlaufend aktualisiert wird,
• Zusammentragen von Recyclinginformationen über die Windturbinenkomponente mittels Software und basierend auf beiden Arten von gespeicherten Informationen, und zwar auf den Informationen über die Windturbinenkomponente und auf den Informationen über die Vielzahl von unterschiedlichen Recyclingprozessen, wobei die Recyclinginformationen einen oder mehrere für die Windturbinenkomponente geeignete Recyclingprozesse umfassen, wobei der Schritt des Zusammentragens der Recyclinginformationen automatisch durchgeführt wird, und
• Ausstellen eines Recyclingpasses (16) für die Windturbinenkomponente basierend auf den Recyclinginformationen, wobei der Recyclingpass (16) ein Dokument ist, das mindestens einen für die Windturbinenkomponente geeigneten Recyclingprozess ausweist.

2. Verfahren nach Anspruch 1, das den folgenden zusätzlichen Schritt umfasst:
• Bereitstellen des Recyclingpasses (16) für einen potenziellen Kunden (18) und/oder einen derzeitigen Eigentümer (20) der Windturbinenkomponente.

3. Verfahren nach Anspruch 1 oder 2, wobei der Recyclingpass (16) auf Anfrage seitens eines derzeitigen Eigentümers (20) der Windturbinenkomponente ausgestellt wird.

4. Verfahren nach einem beliebigen der Ansprüche 1 bis 3, wobei die Datenbank (10, 12), die die Informationen über die Windturbinenkomponente und/oder die Informationen über die Recyclingprozesse umfasst, von einem Hersteller der Windturbinenkomponente gepflegt wird.

5. Verfahren nach einem beliebigen der Ansprüche 1 bis 4, wobei die Informationen über die Windturbinenkomponente in der Datenbank (10) gespeichert oder aktualisiert werden, wenn ein Herstellungsprozess der Windturbinenkomponente abgeschlossen ist.

6. Verfahren nach einem beliebigen der Ansprüche 1 bis 5, wobei die Informationen über die Windturbinenkomponente eine Seriennummer der Windturbinenkomponente und/oder quantitative Daten zu einer Menge und/oder genauen Zusammensetzung eines in der Windturbinenkomponente umfassten Materials und/oder einen Ort der beabsichtigten Verwendung der Windturbinenkomponente umfassen.

7. Verfahren nach einem beliebigen der Ansprüche 1 bis 6, wobei die Informationen für mindestens einen der Recyclingprozesse ein oder mehrere Materialien, mit denen der Recyclingprozess nicht kompatibel ist, umfassen.

8. Verfahren nach einem beliebigen der Ansprüche 1 bis 7, wobei die Informationen über mindestens einen der Recyclingprozesse Parameter umfassen, die Kosten, einen Energiebedarf, einen ökologischen Fußabdruck, eine Materialrückgewinnungsrate und/oder eine Rate thermischer Rückgewinnung des Recyclingprozesses, wenn dieser auf ein geeignetes Material angewendet wird, angeben.

9. Verfahren nach einem beliebigen der Ansprüche 1 bis 8, wobei der Recyclingpass (16) eine Beschreibung der Windturbinenkomponente, eine Beschreibung eines geeigneten Recyclingprozesses, Informationen über ein zugelassenes Recyclingzentrum und/oder eine Effizienzeinstufung und/oder quantitative Informationen pro Masseeinheit und/oder für die gesamte Windturbinenkomponente zu Kosten, Energiebedarf, ökologischem Fußabdruck, Rate thermischer Rückgewinnung, Materialrückgewinnungsrate umfasst.

10. Verfahren nach einem beliebigen der Ansprüche 1 bis 9, wobei der Recyclingpass (16) mindestens zwei Recyclingprozesse, die für die Windturbinenkomponente und/oder für einen bestimmten Teil der Windturbinenkomponente geeignet sind, und eine Einstufung, die eine Präferenz für mindestens einen der mindestens zwei Recyclingprozesse angibt, ausweist.

11. Verfahren nach einem beliebigen der Ansprüche 1 bis 10, das die folgenden zusätzlichen Schritte umfasst:
• Unterziehen mindestens eines Abschnitts einer Windturbinenkomponente einem Recyclingprozess in einem Prüfverfahren,
• Erheben von Daten über den Recyclingprozess in dem Prüfverfahren, und
• Festlegen der Informationen über den Recyclingprozess, die in der Datenbank (12) zu speichern sind.

12. Verfahren nach einem beliebigen der Ansprüche 1 bis 11, das die folgenden zusätzlichen Schritte umfasst:
• Auswählen eines Recyclingprozesses für eine Windturbinenkomponente basierend auf den Informationen, die in dem Recyclingpass (16) bereitgestellt sind, und
• Recyceln der Windturbinenkomponente mit dem ausgewählten Recyclingprozess.

13. Verfahren nach einem beliebigen der Ansprüche 1 bis 12, wobei die Windturbinenkomponente ein Windturbinenrotorblatt, ein Windturbinenturm, ein Windturbinenfundament, ein in einer Gondel befindlicher Windturbinenteil und/oder ein Windturbinengondelgehäuse ist.

14. Verfahren nach einem beliebigen der Ansprüche 1 bis 13, wobei die Recyclingprozesse einen oder mehrere der folgenden Prozesse umfassen: mechanische Zerkleinerung, Pyrolyse, Solvolyse, Chemolyse, Mischverarbeitung, und/oder wobei die Liste von Materialien eines oder mehrere der folgenden Materialien umfasst: glasfaserverstärkte Kunststoffe, kohlenstofffaserverstärkte Kunststoffe, Epoxid, Polyurethan (PU), Vinylester, Polyethylenterephthalat (PET), Holz, Polyvinylchlorid (PVC), Stahl.

## Revendications

1. Procédé de support d'un processus de recyclage d'un composant d'éolienne, le procédé comprenant les étapes suivantes :
• Stockage d'informations relatives à un composant d'éolienne dans une base de données (10), les informations incluant au moins un type du composant d'éolienne et plusieurs matériaux inclus dans le composant d'éolienne,
• Stockage d'informations relatives à une pluralité de processus de recyclage différents dans une base de données (12), les informations concernant chaque processus de recyclage incluant au moins une liste de matériaux auxquels le processus de recyclage est approprié, dans lequel la base de données (12) comprenant les informations relatives aux processus de recyclage est mise à jour en continu,
• Compilation des informations de recyclage relatives au composant d'éolienne au moyen d'un logiciel et sur la base des deux types d'informations stockées, à savoir les informations relatives au composant d'éolienne et les informations relatives à la pluralité de processus de recyclage différents, les informations de recyclage incluant un ou plusieurs processus de recyclage appropriés au composant d'éolienne, dans lequel l'étape de compilation des informations de recyclage est effectuée automatiquement, et
• Émission d'un passeport de recyclage (16) pour le composant d'éolienne sur la base des informations de recyclage, le passeport de recyclage (16) étant un document divulguant au moins un processus de recyclage approprié au composant d'éolienne.

2. Procédé selon la revendication 1, comprenant l'étape supplémentaire suivante :
• Fourniture du passeport de recyclage (16) à un client potentiel (18) et/ou à un propriétaire actuel (20) du composant d'éolienne.

3. Procédé selon la revendication 1 ou 2, dans lequel le passeport de recyclage (16) est émis à la demande d'un propriétaire actuel (20) du composant d'éolienne.

4. Procédé selon l'une quelconque des revendications 1 à 3, dans lequel la base de données (10, 12) comprenant les informations relatives au composant d'éolienne et/ou les informations relatives aux processus de recyclage est tenue à jour par un fabricant du composant d'éolienne.

5. Procédé selon l'une quelconque des revendications 1 à 4, dans lequel les informations relatives au composant d'éolienne sont stockées ou mises à jour dans la base de données (10) lorsqu'un processus de fabrication du composant d'éolienne est terminé.

6. Procédé selon l'une quelconque des revendications 1 à 5, dans lequel les informations relatives au composant d'éolienne incluent un numéro de série du composant d'éolienne et/ou des données quantitatives sur une quantité et/ou une composition exacte d'un matériau inclus dans le composant d'éolienne et/ou un lieu d'utilisation prévu du composant d'éolienne.

7. Procédé selon l'une quelconque des revendications 1 à 6, dans lequel les informations concernant au moins l'un des processus de recyclage incluent un ou plusieurs matériaux avec lesquels le processus de recyclage est incompatible.

8. Procédé selon l'une quelconque des revendications 1 à 7, dans lequel les informations relatives à au moins l'un des processus de recyclage incluent des paramètres indiquant des coûts, une demande énergétique, une empreinte environnementale, un taux de récupération de matériau et/ou un taux de récupération thermique du processus de recyclage lorsqu'il est appliqué à un matériau approprié.

9. Procédé selon l'une quelconque des revendications 1 à 8, dans lequel le passeport de recyclage (16) inclut une description du composant d'éolienne, une description d'un processus de recyclage approprié, des informations relatives à un centre de recyclage agréé et/ou à un indice de rendement et/ou des informations quantitatives par unité de masse et/ou pour l'ensemble du composant d'éolienne concernant les coûts, la demande énergétique, l'empreinte environnementale, le taux de récupération thermique, le taux de récupération de matériau.

10. Procédé selon l'une quelconque des revendications 1 à 9, dans lequel le passeport de recyclage (16) divulgue au moins deux processus de recyclage appropriés au composant d'éolienne et/ou à une partie spécifique du composant d'éolienne, et un classement indiquant une préférence pour au moins l'un des au moins deux processus de recyclage.

11. Procédé selon l'une quelconque des revendications 1 à 10, comprenant les étapes supplémentaires suivantes :
• Soumission d'au moins une partie d'un composant d'éolienne à un processus de recyclage dans le cadre d'une procédure de test,
• Collecte des données sur le processus de recyclage dans la procédure de test, et
• Établissement des informations sur le processus de recyclage destinées à être stockées dans la base de données (12).

12. Procédé selon l'une quelconque des revendications 1 à 11, comprenant les étapes supplémentaires suivantes :
• Sélection d'un processus de recyclage pour un composant d'éolienne sur la base des informations fournies dans le passeport de recyclage (16), et
• Recyclage du composant d'éolienne avec le processus de recyclage sélectionné.

13. Procédé selon l'une quelconque des revendications 1 à 12, dans lequel le composant d'éolienne est une pale de rotor d'éolienne, une tour d'éolienne, une fondation d'éolienne, une pièce d'éolienne située dans une nacelle et/ou un carter de nacelle d'éolienne.

14. Procédé selon l'une quelconque des revendications 1 à 13, dans lequel les processus de recyclage incluent un ou plusieurs des processus suivants : broyage mécanique, pyrolyse, solvolyse, chimiolyse, co-traitement, et/ou dans lequel la liste des matériaux inclut un ou plusieurs des matériaux suivants : plastiques renforcés de fibres de verre, plastiques renforcés de fibres de carbone, époxy, polyuréthane (PU), ester vinylique, polytéréphtalate d'éthylène (PET), bois, polychlorure de vinyle (PVC), acier.
